# EUROPEAN PATENT APPLICATION

(11) **EP 2 979 533 A1**
(43) Date of publication of application: **03.02.2016**
(21) Application number: 14194290.4
(22) Date of filing: 21.11.2014
(51) Int. Cl.: A01D 78/10

(54) **Foldable twin rake**

(30) Priority: 29.07.2014 JP 2014154212
(71) Applicant: Takakita Co., Ltd., Nabari-City Mie 518-0441 (JP)
(72) Inventor: Okajima, Hiroshi, Nabari-City, Mie 518-0441 (JP)
(74) Representative: Müller Hoffmann & Partner

(57) **Abstract**

A twin rake (1), which gathers grass in a row direction, includes arms (25) that are mounted so as to be vertically rotatable around rotary shafts (26); rakes (3) that are provided so as to be slidable along the arms (25); and a hydraulic cylinder (4) that slides the rakes (3) towards rotary shaft (26) sides of the arms (25) and that raises the arms (25) with the rakes (3) not being slid. When the rakes (3) are to be slid in a rightward direction and a leftward direction, the tilting of the arms (25) is prevented by lower securing means (5d), and, in this state, the hydraulic cylinder (42) is extended and contracted to adjust the positions of the rakes (3). When the arms (25) are to be raised, as a result of contracting the hydraulic cylinder (42) and contact with stoppers (45), and, by further contracting the hydraulic cylinder (42) from this state, the arms (25) are set in a standing manner.

## Description

### BACKGROUND OF THE INVENTION

### 1. Field of the Invention

The present invention relates to a twin rake that gathers, for example, grass in a row direction while a tractor moves in a field. More specifically, the present invention relates to a vertically foldable twin rake including left and right rakes whose widths can be adjusted.

### 2. Description of the Related Art

In general, a twin rake that gathers, for example, grass in one direction includes left and right rakes and is configured to gather grass in one direction by rotating tines, mounted on the rakes, while swinging the tines (see Japanese Unexamined Patent Application Publication No. 9-220019).

Of such twin rakes, the following types are available as ones which include left and right rakes whose widths can be adjusted and which are folded when, for example, a tractor is moving along an ordinary road or the twin rake is accommodated in a storage space.

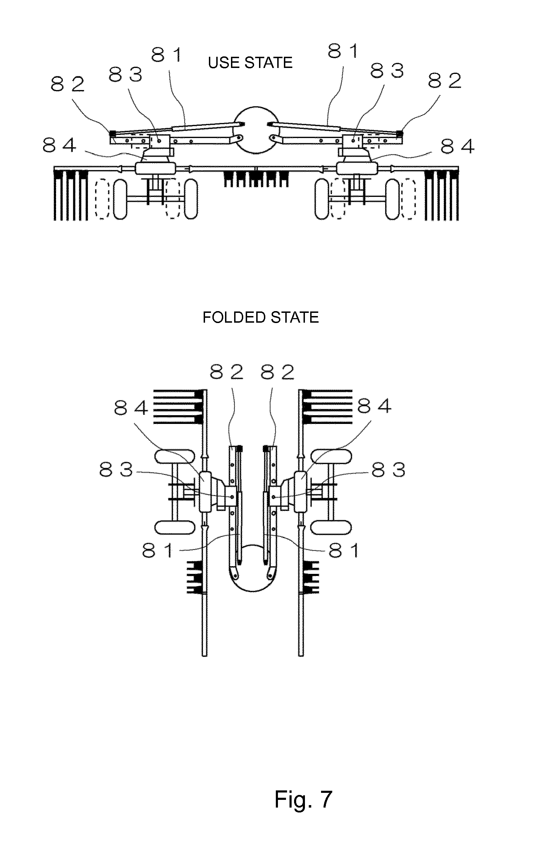

As shown in Fig. 7, in a first twin rake, a left arm 82 and a right arm 82 are raised by hydraulic cylinders 81 (see lower drawing in Fig. 7). In the first twin rake, one of mounting holes 83 that are intermittently provided in the left arm 82 and one of mounting holes 83 that are intermittently provided in the right arm 82 are selected to mount a left rake 84 and a right rake 84. This makes it possible to adjust the widths of the left and right rakes 84.

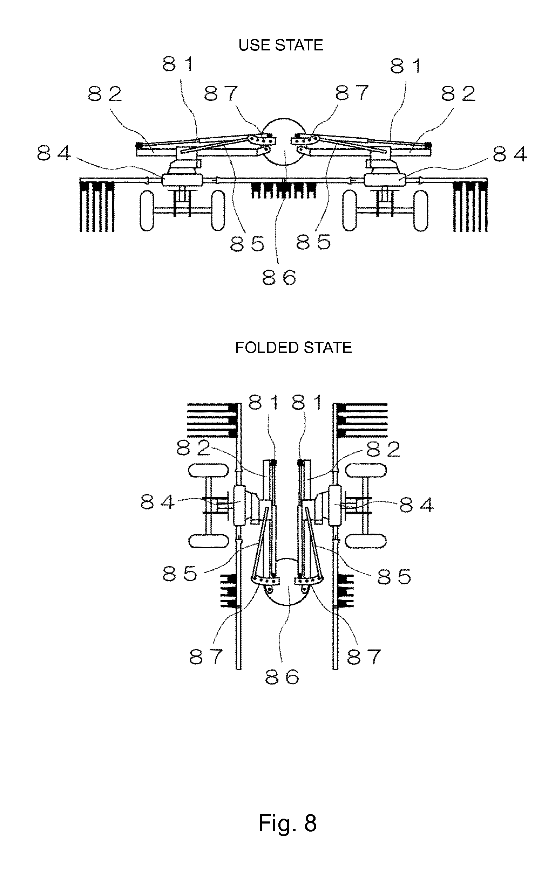

In the structure shown in Fig. 8, link mechanisms are added to such a foldable structure to make it possible to adjust the widths of the left and right rakes 84. The rakes 84 are slidable along the corresponding arms 82, and link members 85 are each obliquely mounted on a portion between the corresponding rake 84 and a main frame 86. Arcuate members 87, each having a plurality of mounting holes, are provided at the main frame 86. By selecting one of the mounting holes of each arcuate member 87 and mounting each link member 85, the positions of the rakes 84 when the arms 82 have been lowered by the corresponding hydraulic cylinders 81 can be adjusted.

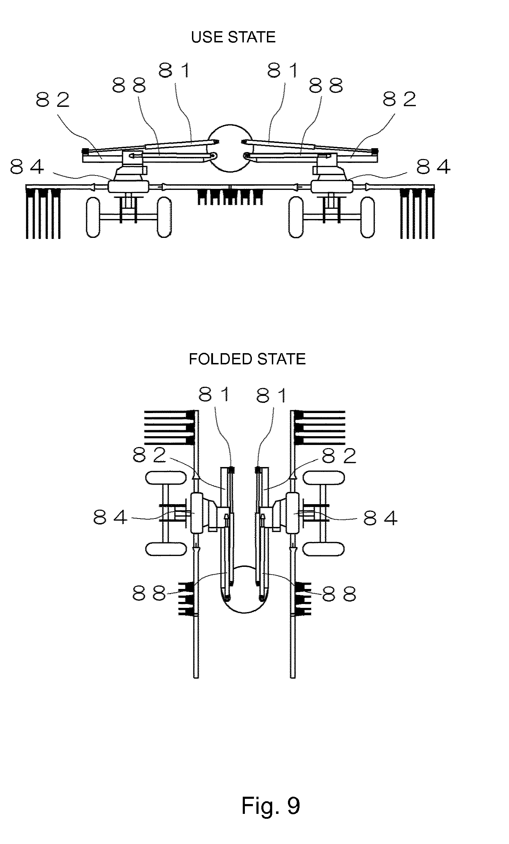

In the structure shown in Fig. 9, similarly, arms 82 can be raised by corresponding hydraulic cylinders 81. Here, hydraulic cylinders 88 for sliding a left rake 84 and a right rake 84 in a leftward direction and a rightward direction are added to make it possible to adjust the widths of the left and right rakes 84.

However, the structures of the foldable twin rakes that make it possible to adjust the position of the left rake and the position of the right rake in this way have the following problems.

That is, in the structure shown in Fig. 7, when a mounting position of the left rake 84 and a mounting position of the right rake 84 are to be adjusted, the mounting positions can only be adjusted within the ranges of the intermittently provided mounting holes 83, and a dedicated tool is required for the mounting operations. In addition, when an attempt is made to fold the twin rake with a wide work width, the height is increased. Therefore, the rakes can no longer fit into a storage space. Consequently, each time the twin rake is used, the mounting positions of the left and right rakes 84 need to be moved towards the center.

In the structure shown in Fig. 8, when the work width is to be adjusted, it needs to be adjusted with the arms 82 being folded. In addition, since link mechanisms need to be added, the structure becomes complicated.

In the structure shown in Fig. 9, when the work width is to be adjusted, hydraulic cylinders 88 need to be added.

Therefore, costs are highest.

### SUMMARY OF THE INVENTION

Accordingly, it is an object of the present invention to provide a foldable twin rake which makes it possible to adjust a work width with a simple, low-cost structure.

To this end, according to an aspect of the present invention, there is provided a twin rake that gathers grass in a row direction. The twin rake includes arms that are mounted so as to be vertically rotatable around a left rotary shaft and a right rotary shaft; rakes that are mounted so as to be slidable along the arms; and a raising-and-lowering mechanism that slides the rakes towards rotary shaft sides of the arms, and that rotates the arms so as to raise the arms with the rakes not being slid.

By virtue of such a structure, for example, when a hydraulic cylinder or the like is used as the raising-and-lowering mechanism, it is possible to adjust the positions of the rakes and raise and lower the arms using one hydraulic cylinder.

The twin rake may further include lower securing means for securing the arms in a horizontal state.

By virtue of such a structure, when the rakes are slid in the leftward and rightward directions using the obliquely provided hydraulic cylinder, since the arms are horizontally secured, the arms are no longer tilted in the direction of the hydraulic cylinder.

The twin rake may be such that the raising-and-lowering mechanism is a hydraulic cylinder, and may further include an extension amount restricting unit that is provided in an axial direction of the hydraulic cylinder and that restricts a maximum extension amount of the hydraulic cylinder.

By virtue of such a structure, when the maximum left and right widths of the rakes are to be restricted, the extending of the hydraulic cylinder in the axial direction is restricted, so that, compared to the case in which, for example, stoppers that restrict sliding of the rakes are provided at the outer sides of the arms, it is possible to reduce the load that is applied to, for example, the stoppers. This makes it possible to form the arms out of, for example, thin steel plates, and to, for example, reduce costs and weight.

According to the present invention, the twin rake, which gathers grass in a row direction, includes arms that are mounted so as to be vertically rotatable around a left rotary shaft and a right rotary shaft; rakes that are mounted so as to be slidable along the arms; and a raising-and-lowering mechanism that slides the rakes towards rotary shaft sides of the arms, and that rotates the arms so as to raise the arms with the rakes not being slid. Therefore, for example, when a hydraulic cylinder or the like is used as the raising-and-lowering mechanism, it is possible to adjust the position of each rake and to raise and lower each arm using one hydraulic cylinder.

### BRIEF DESCRIPTION OF THE DRAWINGS

Fig. 1 is a schematic plan view of a twin rake according to an embodiment of the present invention;
Fig. 2 is a back view of the twin rake according to the embodiment;
Fig. 3 shows a slid state of one of rakes according to the embodiment;

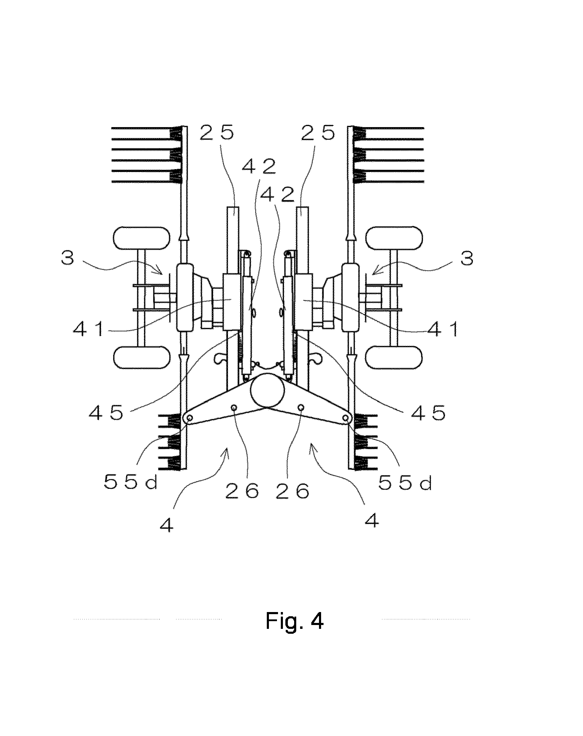

Fig. 4 shows a state in which the rakes according to the embodiment are folded;
Figs. 5A and 5B show an extension amount restricting unit of a hydraulic cylinder according to the embodiment;
Figs. 6A and 6B show folding when an arm according to the embodiment is seen from a front side;
Fig. 7 shows an existing twin rake;
Fig. 8 shows another existing twin rake; and
Fig. 9 shows still another existing twin rake.

### DESCRIPTION OF THE PREFERRED EMBODIMENT

An embodiment of the present invention is hereunder described with reference to the drawings.

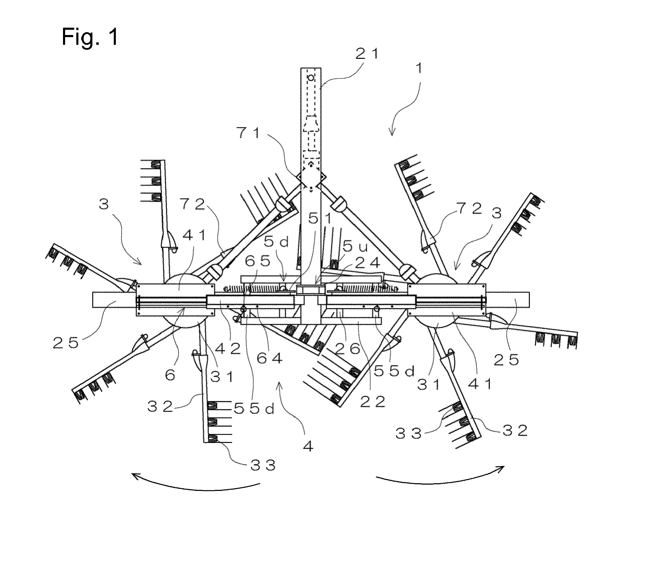

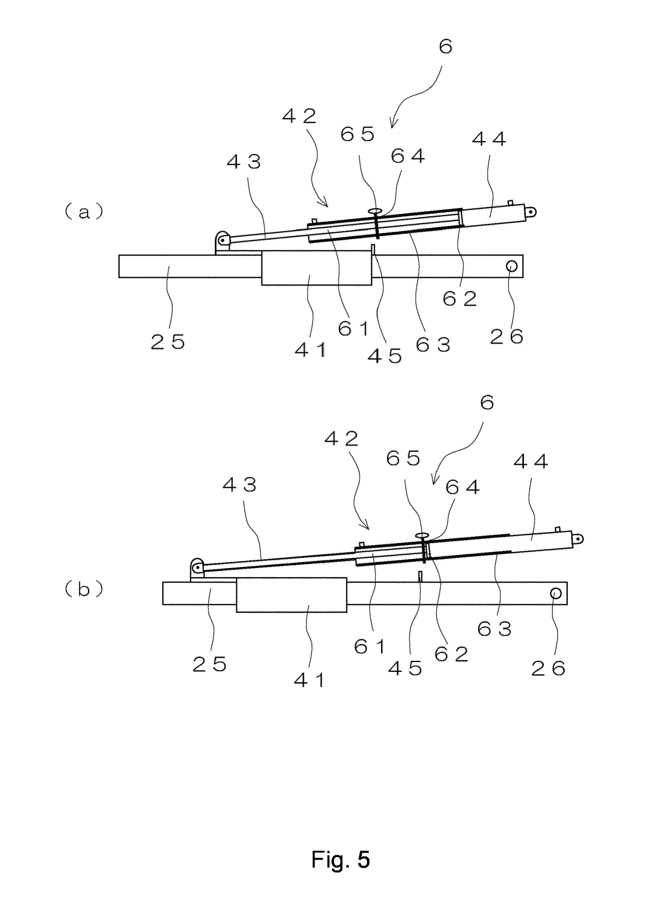

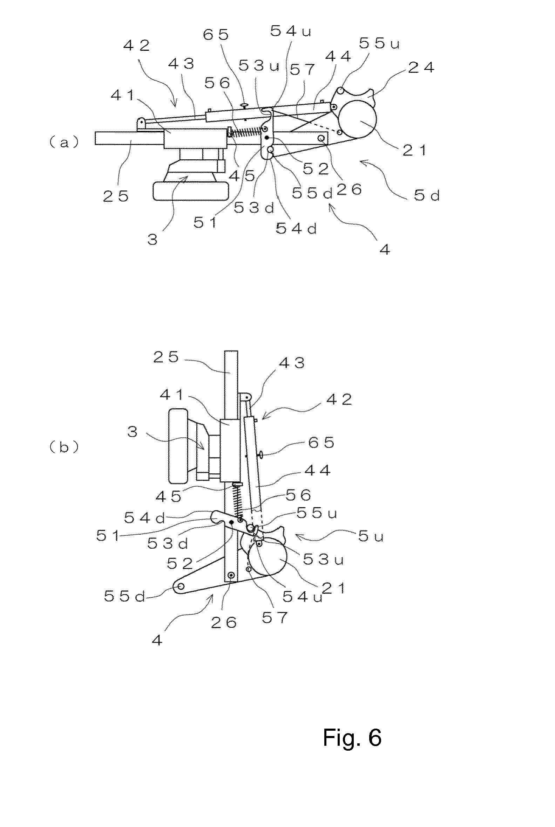

A twin rake 1 according to the embodiment gathers, for example, grass in a row in a movement direction of a tractor that moves in a field. As shown in Fig. 1, the twin rake 1 includes arms 25, which are provided, respectively, on the left and right of a main frame 21, and rakes 3, which are mounted so as to be slidable in an axial direction of the respective arms 25. In the twin rake 1, by rotating tines 33, which are provided along outer peripheries of the rakes 3, the grass in the field is raked to gather the grass in one row. A feature of such a structure is that, referring to Figs. 5A, 5B, 6A, and 6B, using one hydraulic cylinder 42, the arms 25 are rotated so as to be vertically folded, and, using this hydraulic cylinder 42, the rakes 3 are slid in the axial direction of the corresponding arms 25, to make it possible to adjust the widths of the left and right rakes 3. The structure of the twin rake 1 according to the embodiment is hereunder described in more detail.

First, the main frame 21 is connected to, for example, a lower link or a top link of a tractor, and is a circular cylindrical metallic frame extending in a forward and a rearward direction. The arms 25 extending in a leftward direction and a rightward direction are mounted on respective left and right sides of a back portion of the main frame 21. The arms 25 can be vertically folded around corresponding rotary shafts 26.

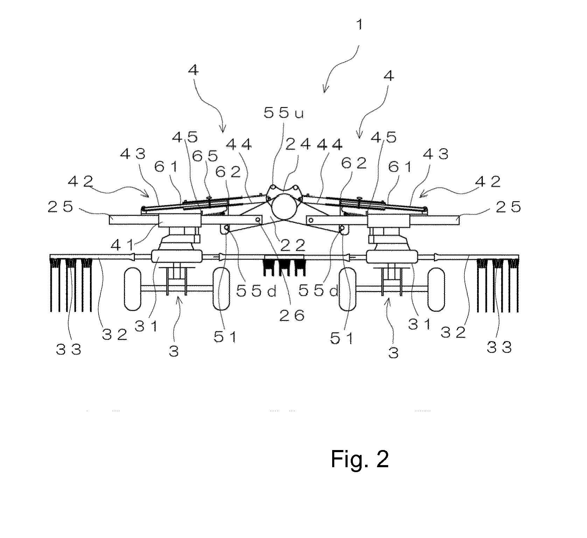

As shown in, for example, Figs. 1 and 2, the rotary shafts 26 of the arms 25 are provided on a pair of front and back (see Fig. 1) lower plates 22 extending towards left and right sides from a lower side of the main frame 21. The arms 25 are vertically rotated around the rotary shafts 26. Contact portions 55d for placing lower end portions of the arms 25 in a horizontal state are provided, one on an outer left side of the rotary shaft 26 and the other on an outer right side of the rotary shaft 26. By placing the arms 25 on the contact portions 55d, the arms 25 are maintained in the horizontal state.

The rakes 3 mounted on the corresponding arms 25 each include, for example, a rotor 31, a tine bar 32, radially mounted on an outer peripheral portion of the rotor 31, and tines 33, provided at an end portion of the tine bar 32. By rotating each tine bar 32 in an outer peripheral direction by 360 degrees while vertically swinging the tines 33, grass can be gathered in one row. The rotation of the tine bars 32 and the swinging of the tines 33 are performed using driving power that is generated by PTO of a tractor. As shown in Fig. 1, via a Y-shaped transmission 71, which is provided below a central portion of the main frame 21, rotary force thereof is transmitted to a left branch driving shaft 72 and a right branch driving shaft 72 as driving force. Using rotary force from the branch driving shafts 72, the tine bars 32 are rotated and the tines 33 are swung. The left branch driving shaft 72 and the right branch driving shaft 72, which branch from the Y-shaped transmission 71, can be extended and contracted in an axial direction. Therefore, even when the positions of the left and right rakes 3 have been adjusted, the branch driving shafts 72 can be extended or contracted so as to follow the adjustment of the positions of the left and right rakes 3.

The rakes 3 on which such tine bars 32 and tines 33 are mounted are mounted on the arms 25 extending in the leftward and rightward directions via slide frames 41. By sliding the slide frames 41 in the axial direction of the arms 25, the positions of the left and right rakes 3 can be adjusted.

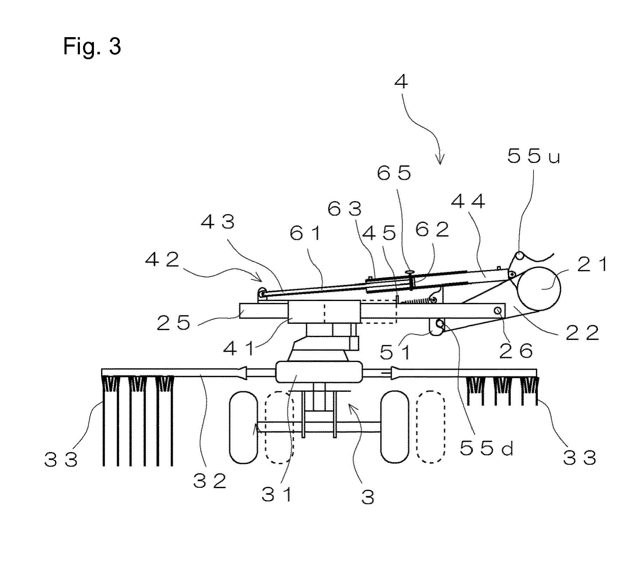

When the positions of the rakes 3 are to be adjusted, as shown in Fig. 3, by extending and contracting the hydraulic cylinder 42 that extends obliquely downward from an upper side of the main frame 21, the positions of the rakes 3 can be adjusted. More specifically, an end of each piston rod 43 of the hydraulic cylinder 42 is mounted on the slide frame 41 of the corresponding rake 3. By extending each piston rod 43, each rake 3 (slide frame 41) is moved towards an end of the corresponding arm 25. In contrast, by contracting each piston rod 43, each rake 3 (slide frame 41) is moved to a base end, which is at a side of the main frame 21, of the corresponding arm 25. At this time, it is necessary to prevent, for example, falling off of the rakes 3 from the arms 25 by restricting maximum movement widths of the rakes 3. Here, stoppers 45 are provided in a standing manner at the base ends of the corresponding arms 25. The slide frames 41 contact the stoppers 45, to restrict movement towards the rotary shafts 26. As regards the restriction of movement of the slide frames 41 towards the outer side, slide bars 61, which are provided in an axial direction of the hydraulic cylinder 42, are used to restrict the maximum movement widths. As shown in Figs. 5A and 5B, one end of each slide bar 61 is mounted to one end of the piston rod 43 of the hydraulic cylinder 42, and the other end of each slide bar 61 is provided along a side of its corresponding cylinder tube 44. The other end of each slide bar 61 is provided with a flange 62. Each flange 62 is moved in its corresponding channel member 63, provided along its corresponding cylinder tube 44. As shown in Fig. 1, top surfaces of the channel members 63 are provided with a plurality of intermittently formed holes 64. By inserting stopper pins 65 into the holes 64, the flanges 62 are made to contact the stopper pins 61. In such a structure, when the piston rods 43 are extended, the flanges 62 of the corresponding slide bars 61 move towards the left and right outer sides. Referring to Fig. 5B, the flanges 62 contact the stopper pins 65 that are inserted in the holes 64 of the corresponding channel members 63. This restricts the maximum extension width of the hydraulic cylinder 42, so that outer-side maximum movement widths of the rakes 3 are restricted. The outer-side maximum movement widths of the rakes 3 can be restricted by providing, for example, stoppers that are provided in a standing manner at the corresponding arms 25. However, in such a case, a large hydraulic pressure that is generated when the hydraulic cylinder 42 is extended is applied as it is to the stoppers. This may break, for example, the arms 25 and the stoppers. Therefore, here, the load that is applied to the arms 25 is reduced by restricting the extension of the hydraulic cylinder 42 in the axial direction. Even if a large hydraulic pressure that is generated when the hydraulic cylinder 42 is contracted is applied to the stoppers 45 at the base end sides of the arms 25, the stoppers 45 are prevented from being deformed by reducing the load applied thereto as a result of upwardly rotating the arms 25.

When the widths of the rakes 3 are adjusted in this way, the arms 25 become tilted due to friction between the slide frames 41 and the corresponding arms 25 or due to force that is applied obliquely upward from the hydraulic cylinder 42. Therefore, lower securing means 5d for securing the arms 25 in a horizontal state are provided.

Referring to, for example, Fig. 6A, each lower securing means 5d includes a contact portion 55d, which is provided on a pair of front and back lower plates 22, and a securing member 51, which is mounted so as to be rotatable around a pin 52 provided at a side surface of the corresponding arm 25. By causing recesses 53d, provided at lower portions of the securing members 51, to be caught by the corresponding contact portions 55d, the arms 25 are secured in a horizontal state. Lower end portions of the securing members 51 are provided with corresponding curved portions 54d that contact the circular cylindrical contact portions 55d when the arms 25 are rotated to a horizontal state. By causing the curved portions 54d to contact circular cylindrical outer peripheral portions of the corresponding contact portions 55d, the securing members 51 are rotated and caught by the corresponding contact portions 55d. When the securing members 51 are to be caught by the corresponding contact portions 55d in this way, their caught states are maintained at all times by pull strengths of springs 56, provided between the securing members 51 and the corresponding arms 25. When the securing members 51 and the corresponding contact portions 55d are to be brought out of their caught states, a worker pulls a string 57, provided at an upper portion of each securing member 51, from the side of a tractor, to bring the recesses 53d and the corresponding contact portions 55d out of their caught states against the forces of the springs 56. Here, although the strings 57 are pulled from the side of the tractor, the securing members 51 and the corresponding contact portions 55d may be brought out of their caught states by, for example, a solenoid or a motor.

Next, a raising-and-lowering mechanism 4 for causing the arms 25 to be raised substantially vertically is described with reference to Figs. 6A and 6B.

Referring to Fig. 6B, the raising-and-lowering mechanism 4 includes, for example, the above-described hydraulic cylinder 42 and the stoppers 45 at the base end sides of the arms 25. By contracting the hydraulic cylinder 42, the arms 25, which are rotatably supported by the corresponding rotary shafts 26, are raised vertically. More specifically, when the hydraulic cylinder 42 is contracted while the securing members 51 and the corresponding contact portions 55d are not in their caught states, the slide frames 41 slide towards the base end sides of the arms 25 and come into contact with the corresponding stoppers 45, so that the sliding is restricted (Fig. 6A). When, from this state, the hydraulic cylinder 42 is further contracted, the arms 25 are raised towards the obliquely upwardly provided hydraulic cylinder 42, and are set in a standing manner (Fig. 6B).

The arms 25 that are set in the standing manner in this way are secured in the standing manner by upper securing means 5u. Each upper securing means 5u includes, for example, a recess 53u, provided at the upper portion of the securing member 51, and a circular cylindrical member 55u, which is provided on a pair of front and back upper plates 24 provided on a top surface of the main frame 21. Similarly to the lower securing means 5d, curved portions 54u, provided at the upper portions of the corresponding securing members 51, are brought into contact with corresponding circular cylindrical members 55u to rotate the securing members 51. By rotating the securing members 51 in this way, each recess 53u, provided at the upper portion of its corresponding securing member 51, is caused to be caught by its corresponding circular cylindrical member 55u. Here, similarly, the springs 56, which are provided between the securing members 51 and the corresponding arms 25, maintain the caught states between the recesses 53u and the corresponding circular cylindrical members 55u. The recesses 53u and the corresponding circular cylindrical members 55u are brought out of their caught states by pulling the strings 57 from the side of the tractor.

Next, the operation of the twin rake 1 having such a structure is described.

First, when the left and right arms 25 are to be moved to horizontal positions from their standing positions, the strings 57 are pulled from side of the tractor, to bring the securing members 51 of the upper securing means 5u and the corresponding circular cylindrical members 55u out of their caught states. When, in this state, hydraulic pressure is applied so as to extend the piston rods 43 of the hydraulic cylinder 42, each arm 25 rotates in a horizontal direction, and a lower portion of the base end side of each arm 25 is placed on the corresponding contact portion 55d. At this time, the curved portion 54d of each securing member 51 comes into contact with the curved outer peripheral portion of its corresponding contact portion 55d, and the securing members 51 rotate around the corresponding pins 52. The recesses 53d of the securing members 51 cover the corresponding contact portions 55d, and their caught states are fixed by the pull forces of the springs 56.

In such a state, when the hydraulic cylinder 42 is extended, the slide frames 41 slide outward along the corresponding arms 25, and, referring to Fig. 5B, the left and right rakes 3 move outward. This makes it possible to increase grass gathering width. When the piston rods 43 of the hydraulic cylinder 42 are extended outward in this way, the slide bars 61, which are mounted on the piston rods 43, move outward, and the flanges 62 at the other end sides come into contact with the stopper pins 65, mounted on the holes 64 of the corresponding channel members 63 (state shown in Fig. 5B). By bringing the flanges 62 into contact with the corresponding stopper pins 65, the maximum extension width of the hydraulic cylinder 42 is restricted, so that the rakes 3 do not move further outward.

In contrast, when the hydraulic cylinder 42 is contracted, the slide frames 41 slide towards the base end sides along the arms 25, so that the widths of the left and right rakes 3 can be reduced. This makes it possible to reduce grass gathering width. Here, when the hydraulic cylinder 42 is contracted, the slide frames 41 come into contact with the corresponding stoppers 45 (Fig. 6A), so that the rakes 3 do not move further inward.

When, in this way, the grass gathering width is adjusted, the tractor moves in a field, and the gathering of grass ends, the arms 25 are folded. When the arms 25 are to be folded, the strings 57 are pulled from the side of the tractor, and the securing members 51 of the lower securing means 5d and the corresponding contact portions 55d are brought out of their caught states. In this state, the hydraulic cylinder 42 is contracted.

This causes the slide frames 41 to come into contact with the corresponding stoppers 45 when the hydraulic cylinder 42 is contracted (see Fig. 6A). By further contracting the hydraulic cylinder 42 from this state, the arms 25 are raised with the corresponding rotary shafts 26 as centers (see Fig. 6B) .

With the arms 25 being maximally raised, the upper curved portion 54u at the upper portion of each securing member 51 is caused to contact an outer periphery of the circular cylindrical member 55u of the corresponding upper securing means 5u, and each recess 53u and its corresponding circular cylindrical member 55u are caused to be in a caught state against the pull force of its corresponding spring 56.

In this way, according to the embodiment, the twin rake 1, which gathers grass in a row direction, includes the arms 25 (which are mounted so as to be vertically rotatable around the left and right rotary shafts 26, respectively), the rakes 3 (which are provided so as to be slidable along the corresponding arms 25), and the raising-and-lowering mechanism 4 (which causes the rakes 3 to slide towards the rotary shafts 26 of the corresponding arms 25, and which vertically rotate the arms 25 with the corresponding rakes 3 not being slid). Therefore, it is possible to adjust the left and right widths and to raise and lower the arms 25 using one hydraulic cylinder 42.

The lower securing means 5d that secure the arms 25 in a horizontal state are provided. Therefore, even when the rakes 3 are to be slid in the leftward and rightward directions by contracting the hydraulic cylinder 42, it is possible to prevent the arms 25 from becoming tilted.

Further, extension amount restricting units 6 that restrict the maximum extension amount of the hydraulic cylinder 42 are provided in the axial direction of the hydraulic cylinder 42. Therefore, compared to the case in which, for example, stoppers that restrict the sliding of the rakes 3 are provided at the outer sides of the arms 25, the load that is applied to the stoppers and the frames due to hydraulic pressure can be reduced. Consequently, this makes it possible to form the arms 25 out of, for example, thin steel plates, and to, for example, reduce costs and weight.

The present invention is not limited to the above-described embodiment, so that the present invention can be carried out in various forms.

For example, although, in the embodiment, the case of gathering grass is described, the same structure may also be used for the case in which grass in a field is to be scattered and dried.

Although, in the above-described embodiment, the case in which the hydraulic cylinder 42 is used as the raising-and-lowering mechanism 4 is described, the present invention is not limited thereto. Any structure may be used as long as the mechanism is capable of vertically rotating the arms 25 and capable of sliding the rakes 3 in the axial direction of the arms 25.

Further, in the above-described embodiment, there is described the case in which, when the rakes 3 are slid in the leftward direction and the rightward direction, the arms 25 are prevented from becoming tilted by causing the recesses 53d of the securing members 51 to be caught by the corresponding contact portions 55d. However, any structure may be used for the lower securing means 5d as long as the arms 25 are prevented from becoming tilted.

In the embodiment, structures that cause securing members 51 to be caught by their corresponding circular cylindrical members 55u are described as upper securing means 5u. Even in this case, similarly, any structure may be used as long as the arms 25 can be kept in a raised state.

## Claims

1. A twin rake (1) that gathers grass in a row direction, comprising:
arms (25) that are mounted so as to be vertically rotatable around a left rotary shaft and a right rotary shaft;
rakes (3) that are mounted so as to be slidable along the arms (25); and
a raising-and-lowering mechanism (4) that slides the rakes towards rotary shaft sides of the arms, and that rotates the arms so as to raise the arms with the rakes not being slid.

2. The twin rake (1) according to Claim 1, further comprising:
lower securing means (5d) for securing the arms (25) in a horizontal state.

3. The twin rake (1) according to Claim 1, wherein the raising-and-lowering mechanism (4) is a hydraulic cylinder, and
wherein the twin rake (1) further comprises an extension amount adjusting unit (6) that is provided in an axial direction of the hydraulic cylinder and that adjusts a maximum extension amount of the hydraulic cylinder.
